# EUROPEAN PATENT APPLICATION

(11) **EP 4 722 976 A1**
(43) Date of publication of application: **08.04.2026**
(21) Application number: 24383057.7
(22) Date of filing: 01.10.2024
(51) Int. Cl.: G06K 19/02, G06K 19/077, B27K 3/00

(54) **METHOD AND DEVICE FOR MANUFACTURING A BODY LAYER OF A CARD BODY FOR A CHIP CARD AS WELL AS CHIP CARD AND CONSTRUCTION KIT COMPRISING SAME INVOLVING UTILISATION OF A WOODEN LAYER HAVING A TRANSPARENT SECTION**

(71) Applicant: Giesecke+Devrient ePayments GmbH, 81677 München (DE)
(72) Inventor: MOLINA, Carles, 08820 El Prat de Llobregat (Barcelona) (ES); CONSTANS, Nil, 08820 El Prat de Llobregat (Barcelona) (ES); FLORES, Joan Sushil, 08820 El Prat de Llobregat (Barcelona) (ES)
(74) Representative: LKGLOBAL Partnerschaftsgesellschaft mbB

(57) **Abstract**

Method and manufacturing device (20) of manufacturing a body layer (10) of a card body (2), in particular for a chip card (1), such as a transaction card having a chip module (3) enabling electronic transactions, as well as a corresponding card body (2), chip card (1), use of a wooden layer (W) to form at least a part of a body layer (10) of a card body (2) and a construction kit for a card body (2) are provided, the method comprising the steps of providing a wooden layer (W) to form at least a part of the body layer (10); and adapting the wooden layer (W) to be transparent in at least one transparent section (T).

## Description

### Technical Field

The present disclosure relates to the field of manufacturing chip cards or other portable data carriers comprising a card body carrying an electronic chip module. In particular, the present disclosure relates to a method of manufacturing a body layer of a card body, in particular for a chip card, such as a transaction card having a chip module enabling electronic transactions, to a card body for a chip card, such as a transaction card having a chip module enabling electronic transactions, to a chip card, in particular a transaction card having a chip module enabling electronic transactions, to a manufacturing device for manufacturing body layers of card bodies, in particular for a chip cards, such as a transaction cards having a chip module enabling electronic transactions, to a use of a wooden layer to form at least a part of a body layer of a card body, in particular for a chip card, such as a transaction card having a chip module enabling electronic transactions, and to a construction kit for a card body, in particular for a chip card, such as a transaction card having a chip module enabling electronic transactions, the construction kit comprising a body layer for the card body.

### Background of the Invention

Chip cards, also known as portable data carriers, are known from the state of the art and can be used, for example, for cashless payment of goods or services, for personal identification and/or for access to Internet-based application programs. Accordingly, there are, for example, card-shaped data carriers in the form of chip cards in general, payment cards, such as credit cards or debit cards, as well as ID cards or identity cards. Such chip cards usually have a card body carrying a chip module comprising an electronic circuit with an electronic component, such as an integrated chip, which can be accessed in order to read data from it and based on this, allow a legitimate owner of the data carrier to perform and/or authorize a specific action, such as a transaction, in particular a financial transaction.

According to the prior art, card bodies of portable data carriers and security elements are usually made of plastic which can provide a relatively high stability and resistance of the card body against environmental influences while allowing for an implementation of a wide range of fea-tures as well as adaptations of the card body, for example by forming or embedding secure fea-tures in the plastic material. However, the use of plastic is problematic on the one hand because the chemical substances necessary for the production of the plastic come from limited resources, such as fossil oil, and on the other hand because after a lifetime of the portable data carrier, recycling the plastic can be difficult or expensive, if not impossible. Hence, there is an increased tendency to aim at replacing the plastic with biodegradable and/or natural materials, such as wood, bamboo, or cellulose, which can be provided in a more environmentally friendly, i.e. ecological manner than plastics.

WO 2023/066525 A1, for example, relates to a card-shaped data carrier, in particular a smart card, comprising an electronic chip module with at least one chip and a contact structure and a card body with an arrangement region for receiving the chip module, wherein the chip module is arranged in the arrangement region of the card body, wherein the card-shaped data carrier has at least one first wood layer and at least one second wood layer, wherein the card-shaped data carrier can be bent from a rest position into a bent position by an external force, wherein at least one restoring element for increasing the restoring force of the card-shaped data carrier is arranged between the first wood layer and the second wood layer, wherein the restoring element is designed such that the card-shaped data carrier returns from the rest position when the external force is removed. bent position can be automatically returned, particularly elastically, to the rest position.

US 11 842 237 B2, for example, describes embodiments of biodegradable cards and systems and methods making the same. A biodegradable card can comprise a biodegradable substrate, a magnetic particle slot within the biodegradable substrate configured to receive magnetic particles, a high coercivity magnetic stripe comprising magnetic particles printed on the biodegradable substrate and encoded with payment account data, and a biodegradable water-resistant coating, wherein the coating covers at least the magnetic stripe. The substrate can comprise one or more biodegradable materials, including without limitation one or more biodegradable materials selected from the group of wood, bamboo, bioplastics (e.g., soy bioplastics), cellulose (e.g., compressed cellulose), cork, fiberboard, linoleum, paper, and sand.

CN 205750847 U relates to a transaction card with wooden texture stereo-effect, top -down be equipped with chip module layer, hot -melt adhesive layer, rubberizing rete in proper order, go up transparent substrate layer, transparent substrate layer and glued membrane layer down, still is equipped with wooden substrate layer between the transparent substrate layer on last transparent substrate layer under with, and this wooden substrate layer and upper and lower transparent substrate layer are passed through the lamination glue bond and be in the same place, the utility model discloses owing to be the wooden substrate layer of having added true existence in calorie body, it is different from the printing effect that wooden texture embodied, and its stereo-effect is stronger, and every local line is different on the wooden substrate layer in addition, and each card of making is all inequality, and the effect is more pleasing to the eye, and the personalization is stronger, mainly uses in fields such as finance, traffic, authentication and electronic payment.

DE 102 19 306 B4 deals with an electronic data carrier, in particular a smart card, with numerous electronic components is manufactured from two components which are joined together in a final process step to form the finished data carrier. The first component contains all electronic components, and the second component has a recess for installing the first component. A graphic component can be manufactured according to ecological principles, for example from biodegradable material such as paper or biodegradable plastic.

Furthermore, Qinqin Xia et al., "Solar-assisted fabrication of large-scale, patternable transparent wood", Sci. Adv.7, eabd7342(2021), DOI:10.1126/sciadv.abd7342, lay down that transparent wood is considered a promising structural and light management material for energy-efficient engineering applications. However, the solution-based delignification process that is used to fabricate transparent wood generally consumes large amounts of chemicals and energy. They report a method to produce optically transparent wood by modifying the wood's lignin structure using a solar-assisted chemical brushing approach. This method preserves most of the lignin to act as a binder, providing a robust wood scaffold for polymer infiltration while greatly reducing the chemical and energy consumption as well as processing time. The obtained transparent wood (~1 mm in thickness) demonstrates a high transmittance (>90%), high haze (>60%), and excellent light-guiding effect over visible wavelength. Furthermore, we can achieve diverse patterns directly on wood surfaces using this approach, which endows transparent wood with excellent patternability. Combining its efficient, patternable, and scalable production, this transparent wood is a promising candidate for applications in energy-efficient buildings.

Y. Y. Li, E. Vasileva, I. Sychugov, S. Popov, L. Berglund, "Optically Transparent Wood: Recent Progress, Opportunities, and Challenges", Advanced Optical Materials 2018, 6, 1800059. https://doi.org/10.1002/adom.201800059, describe Transparent wood as an emerging load-bearing material reinvented from natural wood scaffolds with added light management functionalities. Such material shows promising properties for buildings and related structural applications, including its renewable and abundant origin, interesting optical properties, outstanding mechanical performance, low density, low thermal conductivity, and great potential for multi-functionalization. In this study, a detailed summary of recent progress on the transparent wood research topic is presented. Remaining questions and challenges related to transparent wood preparation, optical property measurements, and transparent wood modification and applications are discussed.

Ziya Yu et al, "Transparent wood containing CsxWO3 nanoparticles for heat-shielding window applications", J. Mater. Chem. A, 2017,5, 6019-6024, DOI https://doi.org/10.1039/C7TA00261K, state that CsₓWO₃ nanoparticles were dispersed in prepolymerized methyl methacrylate (PMMA) and filled in nanopores of delignified wood to prepare transparent wood. The wood-based composite showed excellent near-infrared (NIR, ranging from 780 to 2500 nm) shielding ability and high visible light transparency. The CsxWO3/transparent wood also showed excellent mechanical properties with a fracture strength up to 59.8 MPa and modulus up to 2.72 GPa. CsxWO3/transparent wood is expected to serve as a potential material for smart-window applications.

Methods and systems known from the prior art for providing chip card comprising biodegradable and/or natural materials may not satisfy all requirements regarding customisability. Furthermore, the prior art does not provide security features, such as security elements, which are based on biodegradable and/or natural materials. By contrast, many security elements known from the prior art include certain components, for example certain inks, colour shift particles and/or pigments, are based on substances which may environmentally unfriendly, such as plastics and metals.

### Summary of the Invention

It may be seen as an object underlying the present invention to provide a way providing chip cards comprising a preferably high degree of biodegradable and/or natural materials which are highly customisable. In particular, it may be seen as an object to provide chip cards having card bodies as well as security elements or at least certain features preventing counterfeiting which are based on or at least include biodegradable and/or natural materials. These and further objects are at least partly achieved by the subject-matter of the independent claims.

According to an aspect, of manufacturing a body layer of a card body, in particular for a chip card, such as a transaction card having a chip module enabling electronic transactions, is provided, the method comprising the steps of providing a wooden layer to form at least a part of the body layer; and adapting the wooden layer to be transparent in at least one transparent section.

According to an aspect, a card body for a chip card, such as a transaction card having a chip module enabling electronic transactions, is provided, the card body comprising a body layer at least partially manufactured by a corresponding method.

According to an aspect, a chip card, in particular a transaction card having a chip module enabling electronic transactions, is provided, the chip card comprising a corresponding card body.

According to an aspect, a manufacturing device for manufacturing at least body layers of card bodies, in particular for a chip cards, such as a transaction cards having a chip module enabling electronic transactions, is provided, wherein the manufacturing device is configured to carry out a corresponding method.

According to an aspect, a use of a wooden layer to form at least a part of a body layer of a card body, in particular for a chip card, such as a transaction card having a chip module enabling electronic transactions, is provided, wherein the body layer is at least partially manufactured by a corresponding method.

According to an aspect, a construction kit for a card body, in particular for a chip card, such as a transaction card having a chip module enabling electronic transactions, is provided, the construction kit comprising a body layer for the card body, wherein the body layer is at least partially manufactured by a corresponding method.

The proposed solution allows for a transparent personalization of wooden card bodies. A clear wood pattern may be obtained in the final card. Thereby, chip cards can be provided which on the one hand comprise a high degree of biodegradable and/or natural materials, in particular, wood, and which on the other hand are highly customisable and even allow for implementation of features preventing counterfeiting making use of the transparent section of the wooden layer.

Further developments can be derived from the dependent claims and from the following description. Features described with reference to a card body, chip card, manufacturing device, wooden layer and/or construction kit, as well as components thereof, may be implemented as method steps, or vice versa. Therefore, the description provided in the context of the card body, chip card, manufacturing device, wooden layer and/or construction kit applies in an analogous manner also to respective methods. In particular, features and functions of the card body, chip card, manufacturing device, wooden layer and/or construction kit, as well as their components, may be implemented as method steps which in turn may be implemented as respective device features or functions.

According to a possible embodiment of the method, the transparent section of the wooden layer is provided by chemically and/or physically treating the wooden layer. For example, transparency or at least a certain opaqueness of the transparent section can be provided by by a chemical treatment of the respective section combined with an application of UV light allowing to selectively bleach designated areas of the wooden layer. Once the Wood is bleached, infiltration of a resin, such as an epoxy resin, or alike, into the microchannels of wood can be applied for obtaining the transparent section while maintaining a certain wood pattern. This allows for creating the transparent section in an efficient and reproducible way.

According to a possible embodiment of the method, the wooden layer is provided with a transparent window region. The window region may comprise at least one transparent section of the wooden layer. The transparent section may be provided and/or formed as the window region which can provide an aperture for light transmitted through the transparent section. The transparent section can be selectively and precisely patterned by taking advantage of the different optical transmittance between natural wood and transparent wood sections. This further enhances the customisability and provides options for implementing certain features preventing counterfeiting.

According to a possible embodiment of the method, the wooden layer provided with and/or is a part of a security element. The transparent section may constitute or provide at least a part of the security element. This further enhances the customisability and provides options for implementing certain features preventing counterfeiting.

According to a possible embodiment of the method, the at least one transparent section is being provided in the form of a graphical element, such as a symbol or a group of symbols. For example, the graphical element may be provided by brushing and/or printing a chemical compound onto the wooden layer. This enables to easily prepare transparent Wood with diverse patterns for personalization.

According to a possible embodiment of the method, the at least one transparent section is being provided with at least one pictorial element and/or text element. For example, a graphical element may be shaped as at least one pictorial element and/or text element, a respective symbol or a row or group of symbols. Alternatively, or additionally, the graphical element, pictorial element and/or text element can be applied to the transparent section in the form of another layer, such as a sticker, emblem, film, inlay, or alike. This additionally enhances the customisability and provides options for implementing certain features preventing counterfeiting.

According to a possible embodiment of the method, the at least one transparent section is provided with a print, such as an overprint and/or imprint. The print, overprint and/or imprint may be applied as desired or required by imprinting, spraying, stamping, or alike. For example, the symbol or a row or group of symbols, the pictorial element and/or text element may be provided as a print, overprint and/or imprint. This further enhances the customisability and provides options for implementing certain features preventing counterfeiting.

According to a possible embodiment of the method, the print, overprint and/or imprint, is provided on an upper surface and/or a lower surface of the wooden layer. The upper layer may face a surface and/or provide an upper surface of the card body. The lower layer may face an inner surface and/or provide a lower surface of the card body. This additionally enhances the customisability and provides options for implementing certain features preventing counterfeiting.

According to a possible embodiment of the method, the wooden layer is provided as a sub layer of the card body. The card body may comprise multiple sublayers which may form a layer composite, such as a laminate. This helps in providing the card body with physical and/or chemical properties as desired or required and may additionally help in enhancing the customisability and provides options for implementing certain features preventing counterfeiting.

According to a possible embodiment of the method, a further sub layer for providing a body layer of the card body is provided with a print, overprint and/or imprint in a region where the further sub layer abuts the transparent section. The transparent section and/or window region may enable a view onto the print, overprint and/or imprint through the wooden layer. Multiple wooden layers comprising transparent sections and/or window regions may be provided as sublayers of a composite structure. This further enhances the customisability and provides options for implementing certain features preventing counterfeiting.

### Brief Description of the Drawings

- Fig. 1: is a schematic top view of a chip card having a card body comprising a wooden layer with a transparent section.
- Fig. 2: is a schematic top cross-sectional view of the card body along a cross-sectional line A-A depicted in Fig. 1.
- Fig. 3: is a schematic top view of a manufacturing device and a number of card bodies before singularization.
- Fig. 4: is a schematic illustration of steps of a method for providing the body layer with a transparent section.

### Detailed Description of Embodiments

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject-matter may be obtained through a synoptic review of the illustrations together with a review of the detailed description that follows.

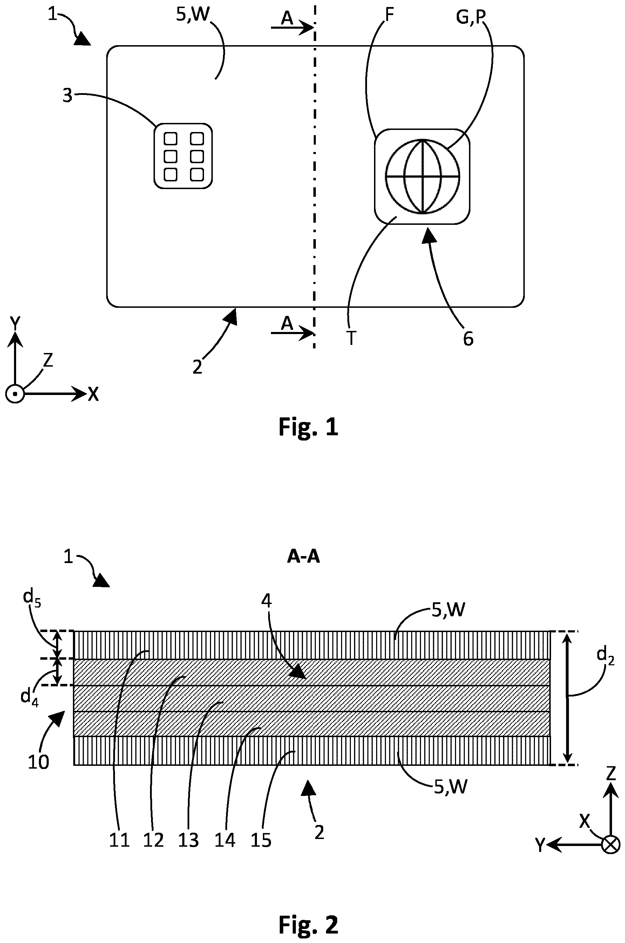

Fig. 1 shows a schematic top view of a chip card 1 having a card body 2 and a chip module 3. The chip card 1 extends in a longitudinal direction X, a transverse direction Y, and a height direction Z, together forming a Cartesian coordinate system. The card body comprises at least one core layer 4 (see Fig. 2 and an outer layer 5 which can be provided as wooden layer W having a transparent section T. The transparent section T maybe formed as a window region F in the wooden layer W. A graphical element G, such as a symbol or a group of symbols, pictural elements and/or text elements, such as letters, can be provided as a print P, such as an overprint and/or imprint on the transparent section T and/or on the core layer 4 below the outer layer 5 to form a security element 6.

Fig. 2 shows a schematic top cross-sectional view of the card body 2 along a cross-sectional line A-A depicted in Fig. 1. The card body 2 comprises a number of core layers 4, which are covered by outer layers 5, namely a top layer facing in the height direction Z and a bottom layer facing in the opposite direction. The core layers 4 and outer layers 5 can be provided as a layer composite C comprising body layers 10, for example, as sub-layers of the layer composite C, such as, for example, a first sub-layer 11, a second sub-layer 12, a third sub-layer 13, a fourth sub-layer 14 and/or a fifth sub-layer 15. The core layer 4 and the outer layers 5 each provide a body layer 10. A core layer thickness d₄ of the core layer 4, measured in each case essentially parallel to the height direction Z, can be similar of essentially the same as a thickness d₅ of the surface layer 5 which together define a thickness d₂ of the card body 2.

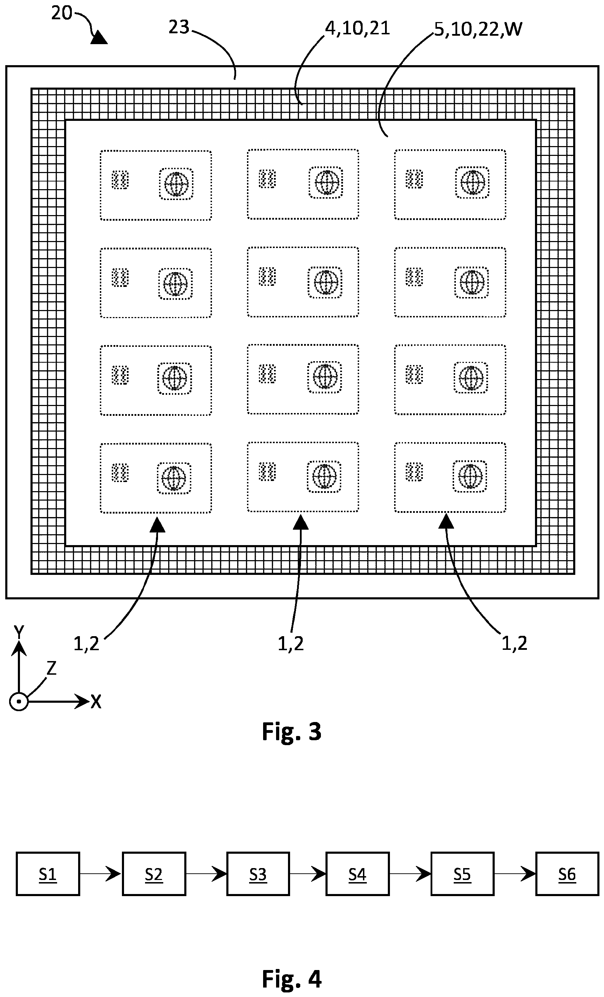

Fig. 3 shows a schematic top view of a manufacturing device 20 and a number of card bodies 2 before singularization, i.e. separation. The at least one core layer 4 can be provided as a single sheet 21, for example a core layer sheet, for a multiplicity of card bodies 2. The surface layer 5 can be provided as a single film or surface layer sheet 22 for a multiplicity of card bodies 2 and can cover the sheet The sheet 21 can be fixed in a receiving device 23, for example a clamping frame, of the manufacturing device 20, at least as long as the core layer 4 and the surface layer 5 are bonded to one another as a layer composite C, for example by laminating, gluing, or alike. After that, the plurality of card bodies 2 or the portable data carriers 1 comprising them can be removed together as a production sheet from the manufacturing device 20 for separation or can be separated within it, for example by punching, laser cutting or alike.

Fig. 4 is a schematic illustration of steps S of a method for providing a body layer 10 in form of a wooden layer W with a transparent section T. In a first step S1, the body layer is provided. In a second step S2, a chemical treatment may be applied in intended transparency section T. For example, . Wood is mainly made up by cellulose and lignin. Lignin is the component that causes it's brownish colour. By using a solution of NaOH and Na₂SO₃. In a third step S3, a further chemical treatment may be applied in the intended transparent section T, such as by an H₂O₂ (hydrogen peroxide) solution. In a fourth step S4, electromagnetic radiation, such as UV-light can be applied to the intended transparency section T. By steps S2 to S4, the wood can be bleached by decreasing the lignin content. Then, in a fifth step S5 a filling agent may be applied such as a resin. For example, Infiltration of polymethyl methacrylate (PMMA) or an epoxy resin can lead to a clear wood film. After obtaining the transparent section T, in a sixth step S6, the print P is applied.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that fea-tures or steps which are described with reference to one of the above exemplary embodiments may also be used in combination with other features or steps of other exemplary embodi-ments described above. Reference signs in the claims are not to be construed as a limitation.

### Reference Signs

- 1: data carrier / chip card
- 2: card body
- 3: chip module
- 4: core layer
- 5: outer layer
- 6: security element
- 10: body layer
- 11: first sub-layer
- 12: second sub-layer
- 13: third sub-layer
- 14: fourth sub-layer
- 15: fifth sub-layer

- d2: thickness of card body
- d4: thickness of core layer
- d5: thickness of outer layer

- C: layer composite
- F: window region
- C: graphical element
- T: transparent section
- P: print
- S: step
- S1: provide body layer
- S2: chemical treatment
- S3: further chemical treatment
- S4: apply radiation
- S5: apply filling agent
- S6: print
- W: wooden layer

## Claims

1. Method of manufacturing a body layer (10) of a card body (2), in particular for a chip card (1), such as a transaction card having a chip module (3) enabling electronic transactions, the method comprising the steps of
- providing a wooden layer (W) to form at least a part of the body layer (10); and
- adapting the wooden layer (W) to be transparent in at least one transparent section (T).

2. The method according to claim 1, wherein the transparent section (T) of the wooden layer (W) is provided by chemically and/or physically treating the wooden layer (W).

3. Method according to claim 1 or 2, wherein the wooden layer (W) is provided with a transparent window region (F).

4. Method according to at least one of claims 1 to 3, wherein the wooden layer (W) provided with and/or is a part of a security element (6).

5. Method according to at least one of claim 1 to 4, wherein the at least one transparent section (T) is being provided in the form of a graphical element (G).

6. Method according to at least one of claims 1 to 5, wherein the at least one transparent section (T) is being provided with at least one pictorial element and/or text element.

7. Method according to at least one of claims 1 to 6, wherein the at least one transparent section (T) is provided with a print (P), such as an overprint and/or imprint.

8. Method according to claim 7, wherein the print (P) is provided on an upper surface and/or a lower surface of the wooden layer (W).

9. Method according to at least one of claims 1 to 8, wherein the wooden layer (W) is provided as a sub layer (11, 12, 13, 14, 15) of the card body (2).

10. Method according to claim 9, wherein a further sub layer (11, 12, 13,14, 15) for providing a body layer (10) of the card body (2) is provided with a print (P) in a region where the further sub layer (11, 12, 13, 14, 15) abuts the transparent section (T).

11. Card body (2) for a chip card (1), such as a transaction card having a chip module (3) enabling electronic transactions, the card body (2) comprising a body layer (10) at least partially manufactured by a method according to at least one of claims 1 to 10.

12. Chip card (1), in particular a transaction card having a chip module (3) enabling electronic transactions, the chip card (1) comprising a card body (2) according to claim 11.

13. Manufacturing device (20) for manufacturing body layers (10) of card bodies (2), in particular for a chip cards (1), such as a transaction cards having a chip module (3) enabling electronic transactions, wherein the manufacturing device (20) is configured to carry out a method according to at least one of claims 1 to 10.

14. Use of a wooden layer (W) to form at least a part of a body layer (10) of a card body (2), in particular for a chip card (1), such as a transaction card having a chip module (3) enabling electronic transactions, wherein the body layer (10) is at least partially manufactured by a method according to at least one of claims 1 to 10.

15. Construction kit for a card body (2), in particular for a chip card (1), such as a transaction card having a chip module (3) enabling electronic transactions, the construction kit comprising a body layer (10) for the card body (2), wherein the body layer (10) is at least partially manufactured by a method according to at least one of claims 1 to 10.
